Europäisches Patentamt

European Patent Office

Office européen des brevets

(11) Numéro de publication: **0 382 643**
**A1**

(12) **DEMANDE DE BREVET EUROPEEN**

(21) Numéro de dépôt: 90400349.8

(51) Int. Cl.⁵: **G21C 11/08**

(22) Date de dépôt: 08.02.90

(30) Priorité: **10.02.89 FR 8901749**

(43) Date de publication de la demande:
**16.08.90 Bulletin 90/33**

(84) Etats contractants désignés:
**DE GB**

(71) Demandeur: **COMMISSARIAT A L'ENERGIE ATOMIQUE**
**31/33, rue de la Fédération**
**F-75015 Paris(FR)**

(72) Inventeur: **Lemercier, Guy**
**67 Avenue de la Bourgade**
**F-13610 Le Puy Sainte Reparade(FR)**
Inventeur: **Renaux, Charley**
**Les Extrées**
**F-13490 Jouques(FR)**

(74) Mandataire: **Mongrédien, André et al**
**c/o BREVATOME 25, rue de Ponthieu**
**F-75008 Paris(FR)**

(54) **Dispositif de protection thermique de la virole supérieure de supportage d'une cuve suspendue, notamment dans un réacteur nucléaire à neutrons rapides.**

(57) Pour assurer le refroidissement de la virole de supportage d'une cuve telle que la cuve interne cylindrique (14) d'un réacteur nucléaire à neutrons rapides, on dispose entre cette virole et une paroi interne (20) contenant un métal liquide à haute température un dispositif de protection thermique (29). Ce dispositif comprend des bacs collecteurs fermés (30) alimentés en métal liquide sous pression et relativement froid par des tuyauteries (32) reliées, par exemple, au sommier (16) du réacteur. Ce métal liquide est projeté sur la virole par des gicleurs formés dans les bacs collecteurs. Ces derniers supportent, du côté tourné vers la paroi (20), des éléments (38) d'une structure passive de protection thermique.

FIG. 1

# DISPOSITIF DE PROTECTION THERMIQUE DE LA VIROLE SUPERIEURE DE SUPPORTAGE D'UNE CUVE SUSPENDUE, NOTAMMENT DANS UN REACTEUR NUCLEAIRE A NEUTRONS RAPIDES.

L'invention concerne un dispositif de protection thermique conçu pour maintenir à une température hors fluage la virole supérieure de supportage d'une cuve suspendue, telle que la cuve principale ou la cuve intérieure cylindrique d'un réacteur nucléaire à neutrons rapides.

Dans les réacteurs nucléaires à neutrons rapides, le coeur du réacteur est placé à l'intérieur d'une cuve, dite cuve principale, remplie de métal liquide tel que du sodium et suspendue à une dalle horizontale qui en assure la fermeture. Dans les réacteurs de type intégré, la cuve principale contient également les pompes primaires et les échangeurs de chaleur du circuit primaire. A l'intérieur de la cuve principale, une cuve interne permet de séparer le métal liquide à haute température (environ 550° C) sortant du coeur du réacteur du métal liquide refroidi dans les échangeurs (à environ 400° C).

Dans une première conception, illustrée notamment par le réacteur français SUPER PHENIX, la cuve interne présente une partie en forme de redan traversée par les pompes et les échangeurs et dont la partie supérieure double intérieurement la partie haute de la cuve principale.

Dans une autre conception, la cuve interne présente une forme cylindrique et elle est directement suspendue à la dalle obturant la cuve principale, indépendamment de cette dernière.

Etant donné que la température du métal liquide contenu dans la cuve interne est supérieure à la température de fluage de l'acier (environ 425° C), il est nécessaire d'assurer le refroidissement et la protection ther mique de la virole supérieure de supportage de la cuve principale des réacteurs comportant une cuve interne à redan et de la cuve interne des réacteurs comportant une cuve interne cylindrique, pour maintenir ces viroles hors fluage en limitant les effets de fatigue.

Dans le cas des réacteurs à neutrons rapides comportant une cuve interne à redan, et comme l'illustre notamment le réacteur français SUPER PHENIX, cette protection thermique est assurée au moyen d'un dispositif dit "à déversoir". Dans ce dispositif, du métal liquide relativement froid prélevé dans le fond de la cuve principale chemine vers le haut, sous l'action des pompes primaires, dans un espace annulaire formé entre cette cuve et un baffle doublant celle-ci intérieurement. Lorsqu'il parvient au niveau du bord supérieur du baffle, le métal liquide se déverse dans un deuxième espace annulaire formé entre ce baffle et une paroi le doublant intérieurement et contenant le métal liquide à haute température sortant du coeur du réacteur.

Ce dispositif connu présente un certain nombre d'inconvénients. En premier lieu, aucune protection thermique n'est assurée lorsque les pompes primaires sont arrêtées, par exemple en cas de panne, puisque le déversement du métal liquide relativement froid est alors interrompu. De plus, ce dispositif nécessite un réglage fin de l'assiette du plan de déversement du sodium froid, faute de quoi ce déversement ne se produit que sur une partie de la circonférence et le refroidissement de la cuve n'est assuré que de façon très partielle. Enfin, ce dispositif conduit à l'existence d'une zone de fabrication complexe (appelée "point triple") à l'endroit où la paroi intérieure est raccordée sur le baffle doublant intérieurement la cuve principale, ce qui rend pratiquement impossible tout contrôle dans cette zone.

L'invention a précisément pour objet un dispositif de protection thermique permettant notamment d'assurer le refroidissement de la structure porteuse de la cuve principale d'un réacteur nucléaire à neutrons rapides à cuve interne à redan, ou le refroidissement de la structure porteuse de la cuve interne d'un tel réacteur à cuve interne cylindrique, en supprimant les inconvénients du dispositif à déversoir utilisé actuellement, tout en présentant de nombreux avantages annexes.

Conformément à l'invention, ce résultat est obtenu au moyen d'un dispositif de protection thermique d'une virole supérieure de supportage d'une cuve suspendue, cette virole étant doublée intérieurement par une paroi intérieure contenant un liquide à une première température supérieure à la température de fluage de la virole, ce liquide étant surmonté par un gaz, ce dispositif étant caractérisé par le fait qu'il comprend au moins un bac collecteur fermé, placé entre la virole et la paroi intérieure et espacé de celles-ci, au moins un tuyau reliant ce bac collecteur à une zone renfermant du liquide, normalement sous pression, à une deuxième température inférieure à la première température, des gicleurs formés dans le bac collecteur débouchant dans le gaz, du côté tourné vers la virole, et une structure passive de protection thermique supportée par le bac collecteur, du côté tourné vers la paroi intérieure, et espacée de cette dernière, de telle sorte qu'un premier espace annulaire est formé entre le dispositif de protection thermique et la virole et qu'un deuxième espace annulaire est formé entre le dispositif de protection thermique et la paroi intérieure.

Ce dispositif a pour premier avantage d'assurer à la fois un fonctionnement actif et un fonctionnement passif. En fonctionnement normal, du liquide relativement froid est projeté par les gicleurs contre la virole de supportage de la cuve suspendue, et ruisselle par gravité le long de la surface intérieure de cette virole. Une température constante est ainsi maintenue à une altitude déterminée. De plus, en cas de panne de la partie active du dispositif la structure passive de protection thermique limite le flux de chaleur et la température sur la structure porteuse à protéger.

En outre, l'injection de liquide relativement froid dans un bac collecteur fermé permet d'assurer l'émission de jets discrets de liquide sur toute la périphérie de la cuve sans qu'un réglage fin de l'assiette du plan d'injection ne soit nécessaire.

Enfin, le point triple apparaissant dans le dispositif à déversoir classique est supprimé, de telle sorte que la structure est simplifiée et autorise, si nécessaire, une inspection de l'intérieur de la cuve.

Le dispositif selon l'invention comprend avantageusement au moins une rangée de bacs collecteurs séparés disposés bout à bout dans une direction circonférentielle, entre la virole et la paroi intérieure, chaque bac collecteur portant un élément de la structure de protection thermique. Dans ce cas, les éléments modulaires du système peuvent être construits en usine, puis transportés sur le site du réacteur. En outre, ils peuvent être démontables, ce qui facilite une inspection interne de la structure porteuse et, éventuellement, sa réparation après vidange du liquide.

Dans un mode de réalisation préféré de l'invention, le collecteur et la structure de protection thermique sont supportés en totalité par l'intermédiaire dudit tuyau, le collecteur comportant des butées aptes à venir en appui sur la paroi intérieure. Cet agencement permet d'assurer un auto-centrage du dispositif par rapport à la cuve porteuse, au moyen des jets discrets de métal liquide relativement froid émis par les gicleurs. Il garantit en outre l'indépendance du supportage du dispositif vis-à-vis de la structure porteuse.

Selon le cas, les bacs collecteurs peuvent être formés soit par une rangée de bacs de section verticale approximativement rectangulaire, soit par plusieurs rangées superposées de bacs collecteurs toriques de section verticale approximativement circulaire.

Les jets discrets en forme de cônes émis par les gicleurs sont orientés sensiblement perpendiculairement à la virole, et peuvent présenter des cônes suffisamment ouverts qui se croisent, si l'on craint que l'arrosage de la cuve soit insuffisant.

De préférence, dans la conception de la cuve interne cylindrique la structure de protection thermique participe complémentairement à la protection radiologique des échangeurs et des pompes primaires. A cet effet, elle comprend un bord supérieur situé à un niveau supérieur à celui du bord supérieur de la paroi intérieure et s'étend vers le bas approximativement sur toute la hauteur de cette dernière.

Cette structure de protection thermique peut être constituée avantageusement par au moins deux plaques espacées s'étendant parallèlement à la virole et à la paroi intérieure, et par des moyens pour interdire une circulation en convection naturelle entre ces plaques.

L'invention concerne également l'application du dispositif de protection thermique définie précédemment à la protection de la virole supérieure de suspension de la cuve principale d'un réacteur nucléaire à neutrons rapides à cuve interne à redan et à la protection de la virole supérieure de suspension de la cuve interne d'un réacteur nucléaire à neutrons rapides à cuve interne cylindrique.

Différents modes de réalisation de l'invention vont à présent être décrits, à titre d'exemples non limitatifs, en se référant aux dessins annexés, dans lesquels :

- la figure 1 est une vue en coupe transversale représentant une partie d'un réacteur nucléaire à neutrons rapides à cuve interne cylindrique, dans lequel la virole supérieure de supportage de cette cuve interne est équipée d'un dispositif de protection thermique conforme à l'invention ;

- la figure 2 est une vue en perspective éclatée représentant plus en détail le dispositif de protection thermique équipant le réacteur de la figure 1 ;

- la figure 3 est une vue en coupe comparable à la figure 1 illustrant l'application du dispositif de protection thermique selon l'invention au refroidissement de la virole supérieure de supportage de la cuve principale d'un réacteur nucléaire à neutrons rapides à cuve interne à redan ;

- la figure 4 est une vue en coupe transversale représentant à plus grande échelle une variante du dispositif de protection thermique selon l'invention, appliquée à un réacteur comportant une cuve interne cylindrique ; et

- la figure 5 est une vue de dessus du dispositif de la figure 4.

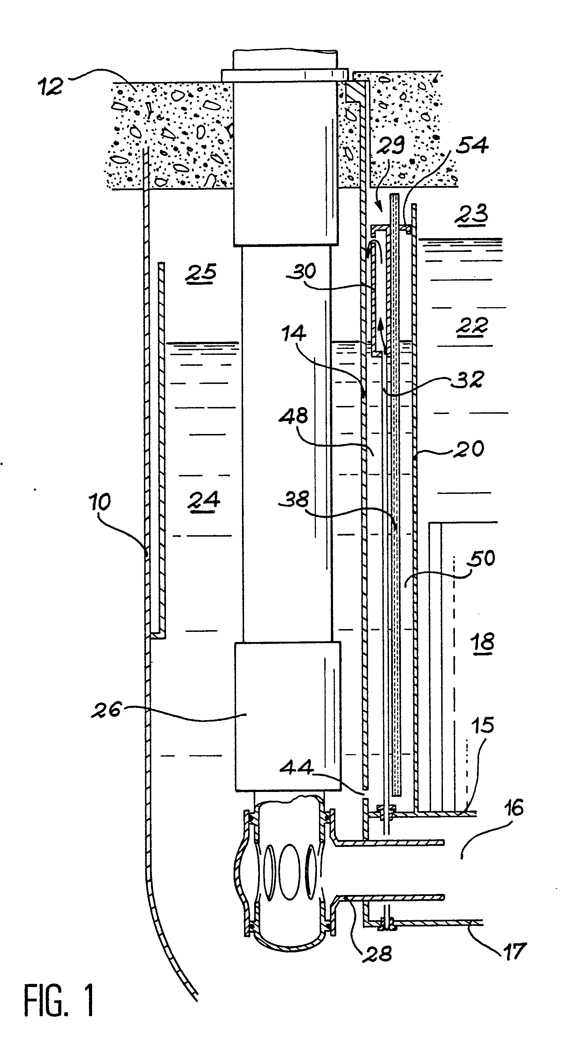

Sur la figure 1, la référence 10 désigne la cuve principale d'un réacteur nucléaire à neutrons rapides refroidi par un métal liquide tel que du sodium. Cette cuve principale 10 est suspendue à une dalle de fermeture horizontale 12.

La dalle de fermeture 12 assure également le supportage d'une cuve interne cylindrique 14 située dans la partie centrale de la cuve 10. Le fond horizontal 15 de la cuve interne 14 constitue la plaque supérieure du sommier 16 d'alimentation et de supportage du coeur 18 du réacteur. Le sommier 16 est délimité à sa base par une plaque inférieure horizontale 17.

Au-dessus de la plaque supérieure 15 du sommier 16, la cuve interne cylindrique 14 est doublée intérieurement par une paroi intérieure cylindrique 20. L'intérieur de cette paroi 20 constitue un collecteur chaud 22 contenant du sodium liquide à haute température sortant du coeur 18 du réacteur. Le bord supérieur de la paroi 20 est situé dans un ciel de gaz neutre 23 surplombant le collecteur chaud 22. La température du sodium dans le collecteur chaud 22, habituellement voisine de 550°C, est supérieure à la température de fluage de l'acier constituant la cuve interne 14.

L'espace formé entre la cuve principale 10 et la cuve interne cylindrique 14 constitue un collecteur froid 24, qui est également rempli de sodium liquide 24, à plus basse température que le sodium du collecteur chaud 22. Le collecteur froid 24 est également surmonté par un ciel de gaz neutre 25. Les pompes 26 et les échangeurs (non représentés) du circuit primaire sont placés dans la partie annulaire de cet espace et suspendus à la dalle 12.

D'une manière en elle-même classique pour les réacteurs à cuve interne cylindrique, des tuyauteries (non représentées) permettent d'acheminer le sodium à haute température contenu dans le collecteur chaud 22 à l'intérieur de la paroi 20 jusqu'aux orifices d'entrée des échangeurs. Le sodium à plus basse température sort des échangeurs par des orifices de sortie qui débouchent directement dans le collecteur froid 24. Le sodium contenu dans ce dernier est ensuite aspiré par les pompes 26 qui le refoulent directement dans le sommier 16 par des canalisations 28.

Dans le réacteur à cuve interne cylindrique qui vient d'être décrit brièvement, la virole de supportage par laquelle la cuve interne cylindrique 14 est suspendue à la dalle 12 risque d'être soumise à des contraintes thermiques importantes, en raison notamment de la température élevée du sodium contenu dans le collecteur chaud 22.

Conformément à l'invention, un dispositif de protection thermique original 29 est placé dans l'espace annulaire séparant la cuve interne 14 de la paroi 20, afin notamment de maintenir à une température hors fluage, c'est-à-dire inférieure à 425°C, en limitant les effets de fatigue, la virole de supportage de la cuve interne 14.

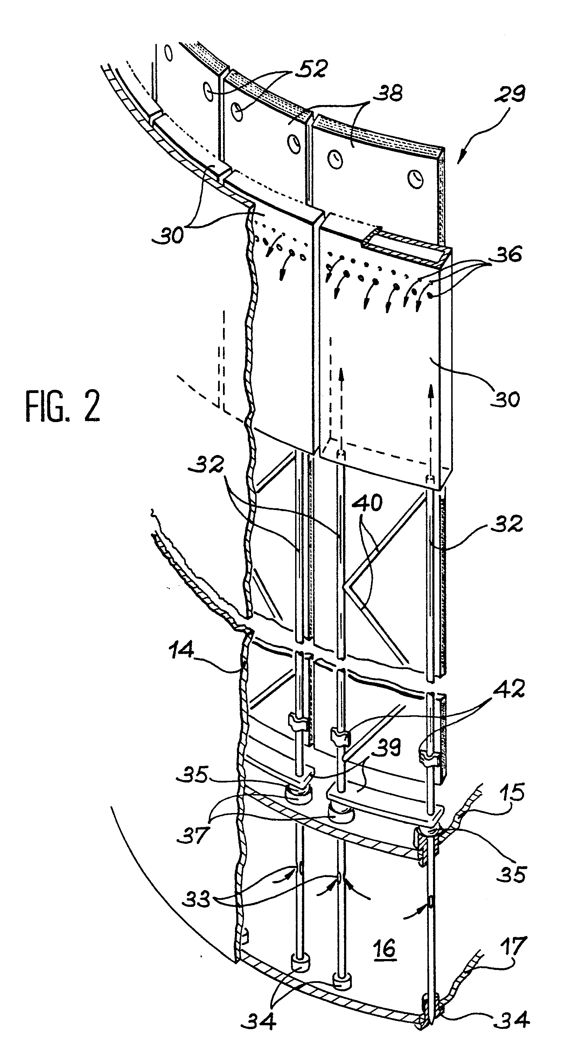

Ce dispositif de protection thermique 29 comprend, dans le mode de réalisation illustré sur les figures 1 et 2, une rangée de bacs collecteurs fermés et étanches 30, de section verticale rectangulaire, disposés bout à bout et au même niveau sur toute la circonférence de cet espace. Les bacs collecteurs 30 sont tous identiques et ils sont séparés les uns des autres par des jeux circonférentiels relativement faibles. Chacun des bacs collecteurs 30 présente deux faces opposées à section horizontale en arc de cercle, qui sont orientées parallèlement à la cuve interne 14 et à la paroi 20, tout en étant espacées de celle-ci.

L'espace clos délimité à l'intérieur de chacun des bacs collecteurs 30 communique avec le sommier 16 du réacteur par exemple par deux tuyauteries verticales 32 qui débouchent dans le fond des bacs collecteurs et traversent le sommier sur toute sa hauteur, comme l'illustre bien la figure 2. A l'intérieur du sommier 16, chacune des tuyauteries 32 comporte au moins un trou 33, par lequel le bac collecteur correspondant est alimenté en sodium relativement froid prélevé dans le sommier 16.

Le montage des tuyauteries 32 dans les plaques supérieure 15 et inférieure 17 du sommier 16 est assuré par un verrouillage hydraulique de la même manière que celui des assemblages combustibles du coeur 18. Ainsi, l'extrémité inférieure fermée de chacune des tuyauteries 32 est centrée dans une douille de centrage 34 montée dans la plaque inférieure 17 du coeur 16, alors que le supportage des tuyauteries s'effectue par la venue en appui d'une protubérance sphérique 35 de chacune des tuyauteries sur une portée conique formée sur une douille 37 montée dans la plaque supérieure 15 du coeur. Comme le montre la figure 2, les deux tuyauteries 32 communiquant avec un même bac collecteur 30 sont en outre reliées entre-elles par une entretoise 39 immédiatement au-dessus des portées sphériques 35, et par des raidisseurs formant treillis 40, qui confèrent à l'ensemble une bonne rigidité. Cette structure permet d'assurer le supportage de chacun des bacs collecteurs 30, indépendamment des autres, sur le sommier 16 du réacteur, et sa démontabilité.

Chacun des bacs collecteurs 30 est équipé, sur sa face tournée vers la cuve interne 14, d'au moins une rangée horizontale de gicleurs 36. Dans le mode de réalisation illustré sur la figure 2, les bacs collecteurs 30 comportent deux rangées de gicleurs 36 régulièrement espacés, disposés sur toute la périphérie de la cuve, à deux niveaux différents, les gicleurs d'une rangée étant disposés en quinconce par rapport aux gicleurs de l'autre rangée. Dans ce même mode de réalisation, les jets discrets de sodium liquide relativement froid sont émis par chacun des gicleurs selon une direction approximativement perpendiculaire à la surface intérieure de la paroi de la cuve interne 14 qui se trouve en vis-à-vis.

Grâce à l'agencement qui vient d'être décrit, la surpression engendrée par les pompes primaires dans le sommier 16 du réacteur a pour effet d'acheminer une partie du sodium relativement froid du sommier 16 dans les bacs collecteurs 30. Etant donné que ces derniers sont totalement fermés, en dehors des gicleurs 36, ils sont donc normalement complètement remplis de sodium liquide relativement froid sous l'effet de la pression. Par conséquent, tant que les pompes primaires du réacteur sont en fonctionnement, du sodium liquide relativement froid s'échappe par les gicleurs 36 et vient mouiller la surface intérieure de la cuve interne 14, compte tenu de sa tension superficielle élevée, pour ruisseler par gravité le long de cette paroi et en assurer ainsi le refroidissement.

Comme le montre la figure 1, l'espace annulaire délimité entre la cuve interne 14 et la paroi 20 doublant intérieurement cette cuve communique par des trous calibrés 44 formés à la base de la cuve 14 avec le collecteur froid 24. Le niveau du sodium liquide relativement froid dans ces deux zones est donc sensiblement le même. Lorsque les pompes primaires 26 sont en fonctionnement, ce niveau est situé légèrement au-dessus de la partie inférieure des bacs collecteurs 30. L'écoulement gravitaire de sodium liquide relativement froid issu des gicleurs 36 assure le refroidissement de la partie de la cuve interne 14 située au-dessus de ce niveau, les gicleurs étant eux-mêmes situés à proximité de la partie supérieure des bacs collecteurs 30.

Avantageusement, l'altitude du plan des gicleurs d'injection correspond au niveau libre du sodium dans les collecteurs 22 et 24 à l'arrêt des pompes primaires. Le gradient thermique entre la dalle 12 et le sodium dans la virole de supportage de la cuve interne est ainsi étalé au mieux.

En plus de la partie active qui vient d'être décrite, le dispositif de protection thermique 29 selon l'invention comprend une structure passive de protection thermique, de forme annulaire, constituée de plusieurs éléments 38 supportés indépendamment les uns des autres par chacun des bacs collecteurs 30. Chacun de ces éléments 38 comprend un empilement de tôles formant baffles thermiques, fixées sur la face du bac collecteur 30 correspondant tournée vers la paroi intérieure 20, et des moyens tels que des plaques horizontales permettant de minimiser la convection naturelle du gaz ou du sodium entre les tôles.

Comme l'illustre la figure 1, chacun des éléments 38 formant baffles thermiques comporte un bord supérieur situé à un niveau supérieur à celui du bord supérieur de la paroi intérieure 20, et il se prolonge vers le bas pratiquement sur toute la hauteur de l'espace annulaire formé entre la cuve interne 14 et la paroi 20, jusqu'à proximité immédiate de la plaque supérieure du sommier 16.

Par ailleurs, dans la direction circonférentielle, chacun des éléments 38 présente la même longueur circonférentielle que le bac collecteur 30 qui le supporte, mais il est décalé circonférentiellement par rapport à ce dernier, de façon à chevaucher le jeu séparant circonférentiellement les collecteurs 30 adjacents.

Le dispositif de protection thermique selon l'invention subdivise ainsi l'espace annulaire ménagé entre la cuve interne 14 et la paroi intérieure 20 en un premier espace annulaire 48 délimité entre la cuve interne 14 et les éléments 38 et un deuxième espace annulaire 50 délimité entre ces derniers éléments et la paroi 20. Le premier 48 de ces espaces annulaires, alimenté par les gicleurs 36 des bacs collecteurs 30, contient du sodium relativement froid à une température d'environ 400° C, alors que le deuxième espace 50 contient du sodium à une température intermédiaire voisine d'environ 475° C. Ces espaces n'étant pas séparés de façon étanche du collecteur froid 24, le niveau du sodium y est pratiquement le même que celui du collecteur froid, ou légèrement supérieur selon la perte de charge déterminée par les passages 44 formés en bas de la cuve interne 14.

Les niveaux des gicleurs 36 ainsi que la hauteur des éléments 38 sont choisis de façon à permettre de maintenir un gradient de température quasi constant de la virole de supportage de la cuve interne 14, à l'interface entre le sodium liquide et le gaz qui le surplombe, aux différents régimes de fonctionnement du réacteur. De ce point de vue, le prolongement vers le haut des éléments 38 jusqu'à proximité de la dalle 12 permet de protéger du rayonnement thermique et de la convection naturelle du gaz la zone de liaison de la virole de supportage avec la dalle 12. Le prolongement vers le bas des éléments 38 permet quant à lui de faciliter et de stabiliser la stratification d'un anneau de sodium à une température proche de celle du collecteur froid, de façon à réduire les gradients thermiques dans les zones de liaison du sommier ou des autres structures du collecteur froid avec la cuve interne. De plus, les éléments 38 entourent le coeur et participent donc complémentairement à la protection radiologique des gros composants du réacteur tel que les échangeurs et les pompes. La fixation des éléments 38 sur chacun des bacs collecteurs 30 est assurée par exemple par des goujons (non représentés), cette fixation étant complétée entre chacun des éléments de protection thermique 38 et chacune des tuyauteries 32 correspondantes par des guides 42 (figure 2).

Des trous 52 formés à proximité du bord supérieur de chacun des éléments 38 permettent d'assurer la manutention, indépendamment les uns des autres, de chacun des modules constitués par l'un des bacs collecteur 30, l'un des éléments 38, et les tuyauteries 32 qui leur correspondent, ces modules reposant sur le sommier 16 par l'intermédiaire des tuyauteries 32.

Enfin, chacun des bacs collecteurs 30 comporte, à son extrémité supérieure, des butées 54 qui viennent en appui contre la paroi intérieure 20 sous l'effet de la réaction engendrée par les jets de sodium émis au travers des gicleurs 36.

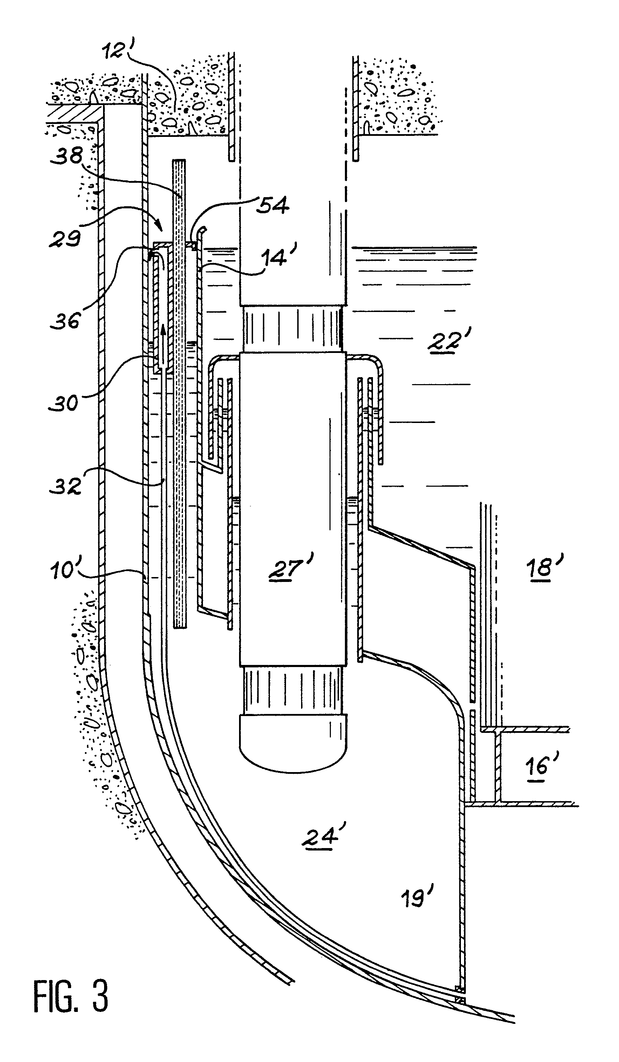

Comme l'illustre la figure 3, le dispositif de protection thermique selon l'invention peut aussi être utilisé pour refroidir la virole de supportage de la cuve principale d'un réacteur nucléaire à neutrons rapides comportant une cuve interne à redan.

Le réacteur nucléaire à neutrons rapides illustré sur la figure 3 comprend une cuve principale 10' suspendue à une dalle de fermeture 12'. Le coeur 18' du réacteur repose sur un sommier 16' d'alimentation et de supportage du coeur, et le sommier 16' repose lui-même sur le fond de la cuve principale par l'intermédiaire d'un platelage 19'. Une cuve interne à redan 14' est fixée à sa base sur le sommier 16' et s'évase de façon à doubler intérieurement la cuve principale 10' dans sa partie supérieure. Cette cuve 14' délimite ainsi, à l'intérieur de la cuve principale 10', un collecteur chaud 22' contenant du sodium liquide relativement chaud et un collecteur froid 24' contenant du sodium liquide relativement froid.

Des pompes (non représentées) et des échangeurs de chaleur 27' sont suspendus à la dalle 12' et traversent la cuve interne 14'. Lorsque les pompes sont en fonctionnement, le sodium liquide circule ainsi du sommier 16' vers le collecteur chaud 22' au travers du coeur 18' du réacteur, puis du collecteur chaud 22' vers le collecteur froid 24' au travers des échangeurs 27'.

Dans un réacteur nucléaire de ce type, le dispositif de protection thermique 29 selon l'invention est placé dans l'espace annulaire délimité entre les parties supérieures cylindriques des cuves 10' et 14'.

Dans le mode de réalisation illustré sur la figure 3, ce dispositif 29 présente une structure analogue à celle qui a été décrite précédemment en se référant aux figures 1 et 2. Il comprend donc une rangée horizontale de bacs collecteurs étanches 30 qui sont supportés et alimentés en sodium liquide relativement froid par des tuyauteries 32. Toutefois, au lieu d'être raccordées sur le sommier 16', les tuyauteries 32 sont raccordées sur le platelage 19', de façon à prélever le sodium relativement froid dans le collecteur froid 24', immédiatement en dessous du sommier.

Les bacs collecteurs 36 sont également munis de gicleurs 34 en haut de leurs faces tournées vers la cuve principale 10', et chacun d'entre eux supporte un élément 38 d'une structure de protection thermique. Cet élément 38 s'étend vers le haut, au-dessus du bord supérieur de la cuve interne 14', jusqu'à proximité de la dalle 12' et vers le bas jusqu'à l'extrémité inférieure de la partie supérieure cylindrique de la cuve interne 14'.

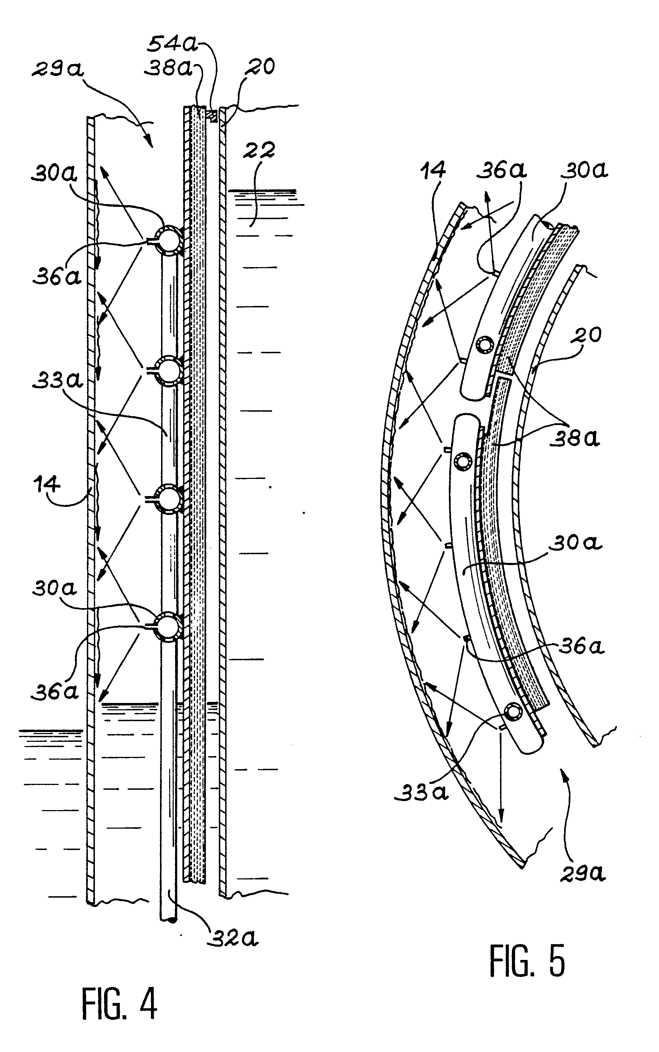

Les figures 4 et 5 illustrent un autre mode de réalisation du dispositif de protection thermique selon l'invention, appliqué à la protection thermique de la virole supérieure de supportage de la cuve interne d'un réacteur nucléaire à neutrons rapides. Il est à noter que ce mode de réalisation pourrait également être appliqué à la protection thermique de la cuve principale d'un réacteur à neutrons rapides comportant une cuve interne à redan, tel que décrit précédemment en référence à la figure 3.

Sur les figures 4 et 5, les références 14 et 20 désignent respectivement la cuve interne cylindrique suspendue d'un réacteur nucléaire à neutrons rapides et la paroi doublant intérieurement cette cuve et délimitant le collecteur chaud 22.

Dans ce mode de réalisation, le dispositif 29a selon l'invention comprend des bacs collecteurs fermés 30a de forme torique, c'est-à-dire présentant une section verticale approximativement circulaire. Plusieurs rangées (par exemple quatre) de bacs collecteurs 30a sont ainsi disposées bout à bout dans des plans horizontaux superposés et équidistants. Les bacs collecteurs des différentes rangées sont alignés verticalement de façon à communiquer entre eux par des canalisations verticales 33a qui prolongent les canalisations 32a par lesquelles les bacs collecteurs de la rangée inférieure sont alimentés en sodium liquide relativement froid à partir du sommier (non représenté) du réacteur.

Comme dans le mode de réalisation décrit précédemment, chacun des bacs collecteurs 30a est équipé d'un certain nombre de gicleurs 36a (par exemple quatre) du côté tourné vers la cuve interne 14. Les jets discrets émis par les gicleurs 36a peuvent présenter des formes coniques suffisamment ouvertes de telle sorte qu'ils se croisent. On peut ainsi, par une répartition régulière et équidistante des gicleurs 36a sur toute la périphérie de la cuve et en altitude, arroser la totalité de la surface intérieure de la virole de supportage de la cuve 14 à protéger, en dessous d'un niveau correspondant approximativement au niveau maximum de sodium liquide dans le collecteur chaud 22. Cet agencement permet de minimiser le débit de sodium relativement froid à prélever, tout en assurant la permanence du refroidissement de la virole.

Le dispositif 29a illustré sur les figures 4 et 5 comprend également, du côté des bacs collecteurs 30a tournés vers la paroi intérieure 20, des éléments 38a de structure de protection thermique dont chacun est supporté par une série de bacs collecteurs 30a alignés verticalement. La structure des éléments 38a, ainsi que leur dimensionnement, est identique à ceux des éléments 38 dans le premier mode de réalisation décrit.

Dans les différents modes de réalisation et application qui viennent d'être décrits à titre d'exemple, on voit que le dispositif de protection thermique selon l'invention permet d'assurer de façon satisfaisante le refroidissement de la structure à protéger au moyen d'une structure relativement simple et sans interdire l'accès à la cuve lorsqu'un contrôle ou une réparation de celle-ci sont nécessaires.

En outre, le dispositif selon l'invention associe à un fonctionnement actif commandé par les pompes un fonctionnement passif garantissant une efficacité minimum même en cas d'arrêt des pompes primaires. Le ruissellement d'un film continu de sodium liquide sur la virole à protéger, obtenu grâce aux gicleurs, permet de maintenir normalement une température quasi constante à une altitude déterminée de la virole de supportage à protéger, aux différents régimes de fonctionnement du réacteur. De plus, la structure de protection thermique permet de réduire les gradients thermiques aux liaisons de la cuve à protéger avec les autres structures. Par ailleurs, en cas d'arrêt des pompes primaires, les bacs collecteurs protégés par les éléments de la structure de protection thermique procurent une inertie thermique qui réduit la température maximale atteinte sur la virole de supportage.

De plus, le dispositif est auto-centré sur la cuve à protéger par les jets discrets de sodium émis par les gicleurs, les réactions hydrauliques dues à ces jets étant reprises par la venue en appui des butées de réaction 54, 54a sur le haut de la paroi doublant intérieurement la cuve à protéger.

Dans le cas particulier où le système est utilisé dans un réacteur à cuve interne cylindrique, le plan d'injection peut être fixé à une altitude assez basse, compte tenu du volume important du collecteur froid par rapport au collecteur chaud. La longueur de la virole de supportage peut donc être accrue, ce qui permet de supprimer le décaissement de la dalle qui existe à la périphérie dans les réacteurs tels que SUPER PHENIX.

Le dispositif selon l'invention ne réclame pas de réglage fin de l'assiette du plan d'injection du sodium froid et les éléments qui le constituent peuvent être construits en usine, puis transportés et montés dans le réacteur. Dans le cas d'un réacteur à cuve interne cylindrique, ces éléments sont démontables et permettent une inspection interne de la structure porteuse, et sa réparation éventuelle après vidange du sodium.

Bien entendu, l'invention n'est pas limitée aux modes de réalisation qui viennent d'être décrits à titre d'exemple, mais en couvre toutes les variantes. On comprendra notamment que les bacs collecteurs ainsi que les éléments de protection thermique peuvent prendre des formes différentes de celles qui ont été décrites. De même, le nombre des collecteurs ainsi que le nombre des tuyauteries d'alimentation et des gicleurs peuvent varier selon l'application choisie.

## Revendications

1. Dispositif de protection thermique d'une virole supérieure de supportage d'une cuve suspendue (14,10'), cette virole étant doublée intérieurement par une paroi intérieure (20,14') contenant un liquide à une première température supérieure à la température de fluage de la virole, ce liquide étant surmonté par un gaz, ce dispositif étant caractérisé par le fait qu'il comprend au moins un bac collecteur fermé (30,30a), placé entre la virole et la paroi intérieure et espacé de celle-ci, au moins un tuyau (32,32a) reliant ce bac collecteur à une zone (16,16') renfermant du liquide, normalement sous pression, à une deuxième température inférieure à la première température, des gicleurs (36,36a) formés dans le bac collecteur débouchant dans le gaz, du côté tourné vers la virole, et une structure passive de protection thermique (38,38a) supportée par le bac collecteur, du côté tourné vers la paroi intérieure, et espacée de cette dernière, de telle sorte qu'un premier espace annulaire (48) est formé entre le dispositif de protection thermique et la virole et qu'un deuxième espace annulaire (50) est formé entre le dispositif de protection thermique et la paroi intérieure.

2. Dispositif selon la revendication 1, caractérisé par le fait qu'il comprend au moins une rangée de bacs collecteurs séparés (30,30a) disposés bout à bout dans une direction circonférentielle, entre la virole et la paroi intérieure, chaque bac collecteur portant un élément (38,38a) de la structure de protection thermique.

3. Dispositif selon la revendication 2, caractérisé par le fait qu'il comprend une seule rangée de bacs collecteurs (30) de section verticale approximativement rectangulaire.

4. Dispositif selon la revendication 2, caractérisé par le fait qu'il comprend plusieurs rangées superposées de bacs collecteurs (30a) de section verticale approximativement circulaire.

5. Dispositif selon l'une quelconque des revendications 2 à 4, caractérisé par le fait que les bacs collecteurs (30, 30a) et les éléments (38,38a) de la structure de protection thermique ont une même longueur circonférentielle, lesdits éléments étant décalés circonférentiellement par rapport aux bacs collecteurs qui les supportent, de façon à chevaucher des jeux séparant circonférentiellement les bacs collecteurs.

6. Dispositif selon l'une quelconque des revendications 1 à 5, caractérisé par le fait qu'il comprend au moins une rangée de gicleurs (36,36a) régulièrement répartis et situés à un même niveau à l'intérieur de la cuve.

7. Dispositif selon l'une quelconque des revendications 1 à 6, caractérisé par le fait que les gicleurs (36) délivrent des jets discrets en forme de cônes orientés sensiblement perpendiculairement à ladite virole.

8. Dispositif selon l'une quelconque des revendications précédentes, caractérisé par le fait que le bac collecteur (30,30a) et la structure de protection thermique (38,38a) sont supportés en totalité par l'intermédiaire dudit tuyau (32,32a), le bac collecteur comportant des butées (54) aptes à venir en appui sur la paroi intérieure (20,14').

9. Dispositif selon l'une quelconque des revendications précédentes, caractérisé par le fait que la structure de protection thermique (38,38') comprend un bord supérieur situé à un niveau supérieur à celui du bord supérieur de la paroi intérieure, et s'étend vers le bas approximativement sur toute la hauteur de cette dernière.

10. Dispositif selon l'une quelconque des revendications précédentes, caractérisé par le fait que la structure de protection thermique (38,38') comprend au moins deux plaques espacées, s'étendant parallèlement à ladite virole et à la paroi intérieure, et des moyens pour interdire une circulation en convection naturelle entre ces plaques.

11. Dispositif selon l'une quelconque des revendications précédentes, caractérisé par le fait que ladite cuve suspendue est une cuve principale (10') d'un réacteur nucléaire à neutrons rapides, cette cuve principale étant remplie de métal liquide et contenant le coeur du réacteur (18') la paroi intérieure étant une cuve interne (14') contenant du métal liquide à ladite première température, alors que ladite zone renfermant du métal liquide à ladite deuxième température est un sommier (16') de supportage et d'alimentation du coeur en métal liquide.

12. Dispositif selon l'une quelconque des revendications 1 à 10, caractérisé par le fait que ladite cuve suspendue est une cuve interne cylindrique (14) d'un réacteur nucléaire à neutrons rapides, ce réacteur comprenant de plus une cuve principale (10) remplie de métal liquide et contenant le coeur du réacteur (18), ce dernier reposant sur un sommier (16) de supportage et d'alimentation du coeur en métal liquide, le sommier étant lui-même supporté par ladite cuve intérieure cylindrique, cette dernière étant doublée intérieurement par ladite paroi intérieure (20), qui contient du métal liquide à ladite première température.

FIG. 1

FIG. 2

EP 0 382 643 A1

FIG. 3

FIG. 4

FIG. 5

---

| | Office européen des brevets | **RAPPORT DE RECHERCHE EUROPEENNE** | Numero de la demande |
|---|---|---|---|

EP  90 40 0349

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 064 921  (NOVATOME) <br> * Page 5, ligne 28 - page 6, ligne 9; figures 2,3 * <br> --- | 1,3,11 | G 21 C   11/08 |
| A | FR-A-2 394 870  (CEA) <br> * Page 7, ligne 36 - page 8, ligne 28; figures 2,3 * <br> --- | 1,5,9, 10 | |
| A | FR-A-2 370 344  (CEA) <br> * Page 4, ligne 11 - page 5, ligne 18; figures 2-4 * <br> --- | 1,3,12 | |
| A | FR-A-2 388 375  (CEA) <br> * Page 2, ligne 33 - page 3, ligne 8; figures 1,2 * <br> ----- | 1,6,11 | |

**DOMAINES TECHNIQUES RECHERCHES (Int. Cl.5)**

G 21 C   11/00
G 21 C   15/00

Le présent rapport a été établi pour toutes les revendications

| Lieu de la recherche | Date d'achèvement de la recherche | Examinateur |
|---|---|---|
| LA HAYE | 06-04-1990 | JANDL F. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................
& : membre de la même famille, document correspondant

EPO FORM 1503 03.82 (P0402)